# EUROPEAN PATENT SPECIFICATION

(11) **EP 1 550 857 B1**
(45) Date of publication and mention of the grant of the patent: **24.02.2010**
(21) Application number: 03748660.2
(22) Date of filing: 01.10.2003
(51) Int. Cl.: G01N 21/64, G01J 1/42, H04N 5/335, G01J 3/28, G01J 3/44, H04N 5/321

(54) **FLUORESCENCE MEASURING DEVICE**
FLUORESZENZMESSEINRICHTUNG
DISPOSITIF DE MESURE DE LA FLUORESCENCE

(30) Priority: 01.10.2002 JP 2002288848
(43) Date of publication of application: 06.07.2005
(73) Proprietor: HAMAMATSU PHOTONICS K.K., Hamamatsu-shi Shizuoka 435-8558 (JP)
(72) Inventor: MARUNO, Tadashi c/o Hamamatsu Photonics K.K., Hamamatsu-shi, Shizuoka 435-8558 (JP); IWASE, Fumio c/o Hamamatsu Photonics K.K., Hamamatsu-shi, Shizuoka 435-8558 (JP); SATO, Taiga c/o Hamamatsu Photonics K.K., Hamamatsu-shi, Shizuoka 435-8558 (JP)
(74) Representative: Frost, Alex John
(86) International application number: PCT/JP2003/012609
(87) International publication number: WO 2004/031748

(56) References cited:
- WO-A-01/90709
- WO-A1-93/19358
- GB-A- 2 323 237
- JP-A- 1 227 948
- JP-A- 59 104 519
- US-A- 4 471 228
- R. CUBEDDU ET AL: "Time resolved reading of DNA microarray by an intensified CCD camera" LASERS AND ELECTRO-OPTICS EUROPE, 2000, [Online] September 2000 (2000-09), XP002405380 ISBN: 0-7803-6319-1 Retrieved from the Internet: URL:http://ieeexplore.ieee.org/iel5/7267/1 9606/00910314.pdf?isnumber=&arnumber=91031 4> [retrieved on 2006-10-31]

## Description

### Technical Field

The present invention relates to a fluorescence measuring apparatus for projecting a plurality of excitation pulse components at regular intervals to a specimen and for measuring fluorescent components emitted from the specimen corresponding to these excitation pulse components.

### Background Art

A fluorescence measuring apparatus is an apparatus that projects a plurality of excitation pulse components generated at regular intervals, to a specimen and that measures fluorescent components emitted from the specimen corresponding to these excitation pulse components. For example, the fluorescence measuring apparatus described in Japanese Patent Application Laid-Open No. 59-104519 includes a streak camera, a sampling means for sampling a streak image on a fluorescent screen of a streak tube, and an image intensifier for intensifying the sampled streak image through photoelectric conversion.
US-A-4,471,228 describes a solid state image sensor having an electronic shutter which controls an exposure time of image sensor cells.
GB-A-2,323,237 discloses a flourescence measuring apparatus having those features set out in the precharacterizing portion of claim 1.

### Disclosure of the Invention

The Inventors investigated the conventional fluorescence measuring apparatus and found the following problem. Namely, the conventional fluorescence measuring apparatus uses the image intensifier to intensify output signals obtained from fluorescent components generated at regular intervals. The reason is that when each fluorescent component is weak, single measurement thereof will not readily allow accurate measurement and that it is thus necessary to expand the dynamic range of output signals. The conventional fluorescence measuring apparatus uses the streak camera and the sampling means in order to meet the fact that the waveform of each fluorescent component is nonlinear. For this reason, there were desires heretofore for achievement of easier fluorescence measurement using a CCD (Charge Coupled Device), without use of the streak camera.

The present invention has been accomplished in order to solve the problem as described above, and an object of the invention is to provide a fluorescence measuring apparatus having a configuration for using the CCD to measure fluorescent components emitted from a specimen in accordance with excitation pulse components projected at regular intervals.

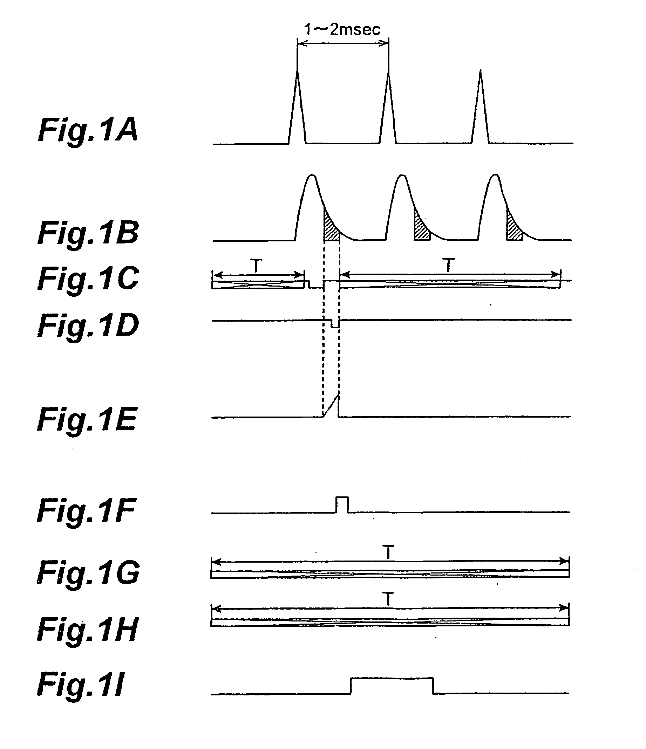

The Inventors conducted various studies about the possibility of measurement with the CCD (Charge Coupled Device) by projecting a plurality of excitation pulse components in the period of 1-2 msec to a specimen and measuring fluorescent components emitted from the specimen corresponding to the excitation pulse components, with the CCD. Figs. 1A-1I are timing charts for explaining an example of those studies. The CCD is a device that effects photoelectric conversion of received fluorescent components by photoelectric converters such as photodiodes (PDs) and that transfers charges obtained by charge storage elements such as vertical transfer elements and horizontal transfer elements. In order to measure the fluorescent components corresponding to the excitation pulse components emitted in the period of 1-2 msec, the period of the photoelectric conversion by the photoelectric converters and the transfer of charges stored in the charge storage elements needs to be 1-2 msec.

Fig. 1A is a timing chart of excitation pulse components, Fig. 1B that of fluorescent components, Fig. 1C that of electronic shutter signals, Fig1D that of readout signals, Fig. 1E that of charge amounts of photodiodes (PDs), Fig. 1F that of stored charge amounts of vertical elements, Fig. 1G that of transfer signals of horizontal elements, Fig. 1H that of transfer signals of vertical elements, and Fig. 1I that of readout of entire data. In Figs. 1C, 1G, and 1H, the period T indicates a period in which output of each signal is repeated at regular intervals.

However, it was found out, as shown in Figs. 1A-1I, that it was possible to perform the photoelectric conversion and the charge release to the charge storage elements in the period of 1-2 msec but it was very difficult to perform the charge transfer as well within that period. Furthermore, it was also found out that when the release and transfer of charges corresponding to fluorescent components was carried out per generation of fluorescence, signals included noise at a significant level against charges stored in the photoelectric converters. This invention has been accomplished on the basis of these knowledge.

A fluorescence measuring apparatus according to the present invention is defined in claim 1.
Embodiments of the invention provide for a fluorescence measuring apparatus for measuring fluorescent components emitted from a specimen corresponding to respective excitation pulse components projected toward the specimen, which comprises a photoelectric converter, a charge storage element, and a controller. The photoelectric converter implements photoelectric conversion of the fluorescent components emitted from the specimen corresponding to the respective excitation pulse components. The charge storage element stores a charge resulting from the photoelectric conversion by the photoelectric converter and transfers the stored charge. The controller outputs an electronic shutter signal for sweeping away the charge resulting from the photoelectric conversion by the photoelectric converter, a readout signal for reading the charge resulting from the photoelectric conversion, into the charge storage element, and a transfer signal for sequentially transferring the read charge. Particularly, the controller outputs an electronic shutter signal corresponding to generation of a pulse component included in excitation light, outputs a readout signal corresponding to output of the electronic shutter signal, and outputs a transfer signal per at least two readout signals outputted.

In the fluorescence measuring apparatus according to the present invention, the controller outputs the electronic shutter signal per generation of an excitation pulse component and outputs the readout signal corresponding to output of this electronic shutter signal. For this reason, it becomes feasible to implement measurement of a fluorescent component corresponding to each excitation pulse component. In addition, since the controller outputs the transfer signal per at least two readout signals outputted, a plurality of fluorescent components can be measured in a lump.

In the fluorescence measuring apparatus according to the present invention, the excitation pulse components and the fluorescent components each are preferably of a substantially identical waveform and identical period. The reason is that when the fluorescent components are of the substantially identical period, the number of fluorescence generations per predetermined time can be readily specified and it is easy to achieve synchronization with the electronic shutter signal. In addition, when the fluorescent components are of the substantially identical waveform, it becomes easy to measure the same waveform part of each fluorescent component.

In the fluorescence measuring apparatus according to the present invention, the controller preferably outputs the electronic shutter signal and the readout signal so as to enable measurement of the same waveform part of each of the fluorescent components. When the same waveform part of each of the fluorescent components is measured, a charge corresponding to each part can be obtained by dividing the measurement result by the number of fluorescent components measured.

Furthermore, in the fluorescence measuring apparatus according to the present invention, the controller outputs the electronic shutter signal and the transfer signal consecutively during a period before emission of a fluorescent component. The reason is that when the electronic shutter signal and the transfer signal are outputted before emission of a fluorescent component, i.e., before a start of measurement, it is feasible to prevent an unwanted charge from being stored in the photoelectric converter and in the charge storage element.

In the fluorescence measuring apparatus according to the present invention, the charge storage element may comprise a first charge storage element for directly receiving the charge from the photoelectric converter, and a second charge storage element for receiving the charge from the first charge storage element. In this case, the controller preferably outputs the transfer signal to the first charge storage element per predetermined number of readout signals outputted, and outputs the transfer signal consecutively to the second charge storage element. The reason is that when the transfer signal is consecutively outputted to the second charge storage element, storage of an unwanted charge in the second charge storage element can be effectively reduced.

The present invention will be more fully understood from the detailed description given hereinbelow and the accompanying drawings, which are given by way of illustration only and are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will be apparent to those skilled in the art from this detailed description.

### Brief Description of the Drawings

Figs. 1A-1I are timing charts for explaining a process of studies toward the present invention;

Fig. 2 is an illustration showing a configuration of a measuring system including a fluorescence measuring apparatus according to the present invention;

Fig. 3 is an illustration showing a configuration of the CCD shown in Fig. 2; and

Figs. 4A-4I are timing charts for explaining the operation in the fluorescence measuring apparatus according to the present invention.

### Best Mode for Carrying out the Invention

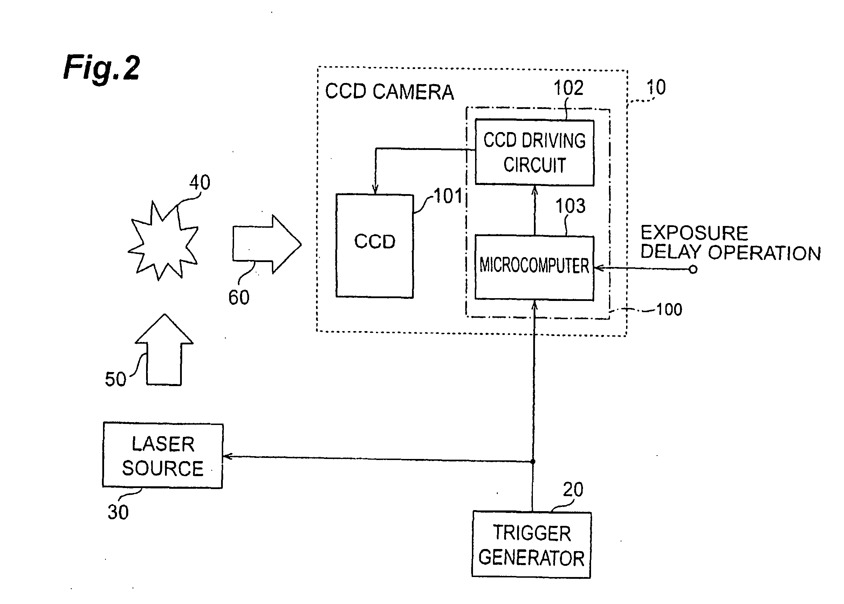

An embodiment of the fluorescence measuring apparatus according to the present invention will be described below in detail with reference to Figs. 2, 3, and 4A-4I. The same portions and the same elements will be denoted by the same reference symbols in the description of the drawings, without redundant description.

Fig. 2 is an illustration showing a configuration of a measuring system including a fluorescence measuring apparatus according to the present invention. The measuring system shown in this Fig. 2 is composed of a CCD camera 10 corresponding to the fluorescence measuring apparatus according to the present invention, a laser source 30, and a trigger generator 20. The CCD camera 10 includes a CCD 101, a CCD driving circuit 102, and a microcomputer 103. The CCD driving circuit 102 and the microcomputer 103 constitute a controller 100 of the fluorescence measuring apparatus.

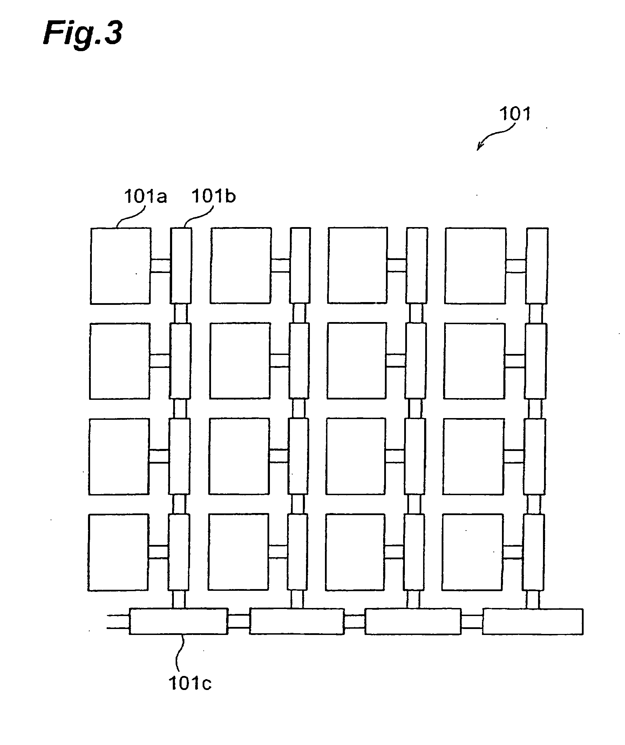

The CCD 101 is an interline transfer type CCD that measures a fluorescent component 60 emitted from a specimen 40, based on a command signal from the CCD driving circuit 102. In particular, as shown in Fig. 3, the CCD 101 includes photodiodes (photoelectric converters) 101a, vertical transfer elements (first charge storage elements) 101b, and horizontal transfer elements (second charge storage elements) 101 c.

Each photodiode 101a is a portion for storing a charge according to an amount of received light, and a plurality of photodiodes 101 a are arrayed on a substrate so as to form a desired light acceptance surface. Each photodiode 101 a sweeps away a stored charge with input of an electronic shutter signal from the CCD driving circuit 102, and moves a stored charge to a vertical transfer element 101b with input of a readout signal from the CCD driving circuit 102.

The vertical transfer elements 101b being the first charge storage elements are provided corresponding to the respective photodiodes 101a. Each vertical transfer element 101b stores a charge moved from an associated photodiode 101a and transfers the charge to an adjacent vertical transfer element 101b according to need. More specifically, each vertical transfer element 101b sequentially transfers a charge stored therein, to a vertical transfer element 101b adjacent on the horizontal transfer element 101 c side with input of a transfer signal from the CCD driving circuit 102. The vertical transfer element 101b adjacent to the horizontal transfer element 101c transfers the charge thus transferred, to the horizontal transfer element 101 c.

Each horizontal transfer element 101c is provided corresponding to a group of vertical transfer elements 101b in a column for transfer of charge from one to another. Each horizontal transfer element 101c stores a charge transferred from an associated column of vertical transfer elements 101b, and transfers the charge to an adjacent horizontal transfer element 101c. A horizontal transfer element 101c at the end finally stores the charge and, by reading the charge from the horizontal transfer element 101c at the end, the entire data resulting from photoelectric conversion by the photodiodes 101a can be read out.

The CCD driving circuit 102 outputs the aforementioned electronic shutter signal, readout signal, and transfer signal, based on a command signal from the microcomputer 103.

The microcomputer 103 outputs to the CCD driving circuit 102 command signals for output of the aforementioned electronic shutter signal, readout signal, and transfer signal, based on a trigger signal from the trigger generator 20. More specifically, the microcomputer 103 calculates timings of output of the electronic shutter signal, readout signal, and transfer signal, based on a trigger signal and an exposure delay operation of designating an exposure delay time of the CCD 101 relative to the trigger signal, and outputs them at the respective timings to the CCD driving circuit 102. These CCD driving circuit 102 and microcomputer 103 constitute the controller 100.

The trigger generator 20 outputs a trigger signal to the laser source 30 and to the microcomputer 103. The laser source 30 emits an excitation pulse component 50 based on this trigger signal, toward a specimen 40. As already described, the specimen 40 emits fluorescent components 60 corresponding to respective excitation pulse components 50 and the CCD camera 10 measures these fluorescent components 60.

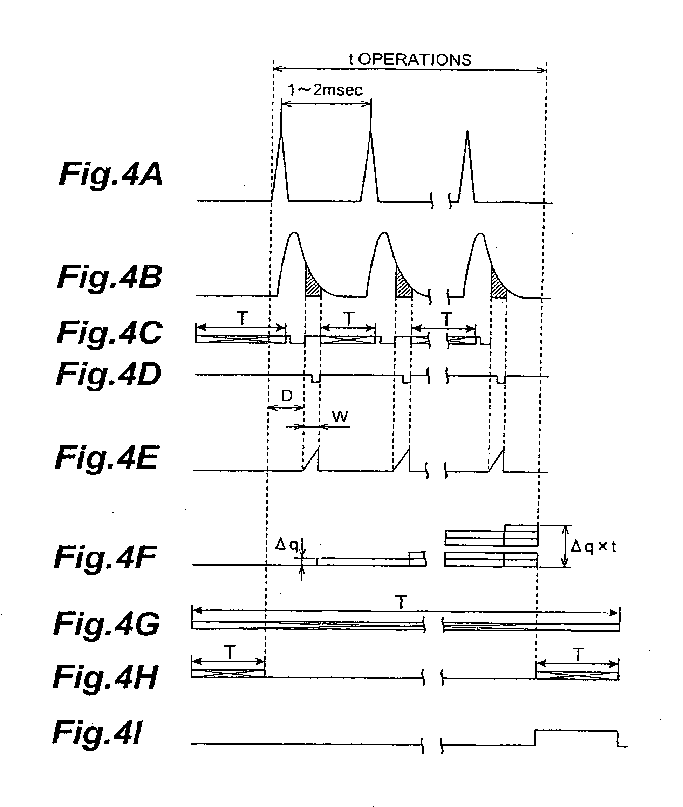

Next, the operation of measurement of the CCD camera 10 will be described using the timing charts shown in Figs. 4A-4I. Fig. 4A is a timing chart of excitation pulse components, Fig. 4B that of fluorescent components, Fig. 4C that of electronic shutter signals, Fig. 4D that of readout signals, Fig. 4E that of amounts of charges in the photodiodes (PDs), Fig. 4F that of amounts of charges stored in the vertical elements, Fig. 4G that of transfer signals for the horizontal elements, Fig. 4H that of transfer signals for the vertical elements, and Fig. 4I that of readout of entire data. In Figs. 4C, 4G, and 4H, the period T indicates a period in which output of each signal is repeated at regular intervals.

The laser source 30 of Fig. 2 emits excitation pulse components 50 according to trigger signals from the trigger generator 20, toward the specimen 40 (see Fig. 4A). The trigger signals are so regulated that intervals of the excitation pulse components 50 become 1-2 msec. The specimen 40 releases fluorescent components 60 according to the excitation pulse components 50 thus emitted (see Fig. 4B). These fluorescent components 60 are optical components emitted according to properties of the specimen 40 and are generally of a nonlinear waveform as shown in Fig. 4B.

An output delay time D of the electronic shutter signal relative to the trigger signal and the delay time W from the output of the electronic shutter signal to output of the readout signal are designated by the exposure delay operation fed to the microcomputer 103. The output delay time D and delay time W can be optionally set between 10 µsec and 400 µsec in consideration of a delay of fluorescent component 60 relative to excitation pulse component 50. Namely, when the output delay time D and the delay time W are optionally set, an exposed part (hatched portion in Fig. 4B) in the waveform of each fluorescent component 60 is optionally set and a spectrum of each fluorescent component 60 is made.

The electronic shutter signals are outputted at regular intervals except for exposure periods from the CCD driving circuit 102 to the CCD 101, as shown in Fig. 4C. Namely, the electronic shutter signals are repeatedly outputted at regular intervals in each period T in Fig. 4C. Since the electronic shutter signal is a signal for sweeping away charges stored in the photodiodes 101 a of CCD 101, it is feasible to reduce storage of unwanted charges in the photodiodes 101a (see Fig. 4E).

A stored charge Δq resulting from photoelectric conversion in each photodiode 101a during an output delay time W is transferred to the associated vertical transfer element 101b with output of a readout signal (see Fig. 4C). In this embodiment, the generation of excitation pulse component 50 is carried out t times, and the charge Δq resulting from photoelectric conversion in each photodiode 101a is transferred t times to the vertical transfer element 101b. After the t operations, a transfer signal is fed to the vertical transfer elements 101b, and each vertical transfer element 101b successively transfers the stored charge (Δq × t) to an adjacent vertical transfer element 101b (see Fig. 4F). The charge thus transferred is then transferred to a horizontal transfer element 101c and is further transferred to an adjacent horizontal transfer element 101c to be read out. The charge thus read out is the charge Δq stored t times, and, by dividing it by the number of operations t, it is feasible to obtain the charge Δq corresponding to a fluorescent component 60 corresponding to one excitation pulse component 50.

The transfer signals to the horizontal transfer elements 101c are always outputted at regular intervals from the CCD driving circuit 102. Namely, the transfer signals are outputted at regular intervals in the period T in Fig. 4G. Since this transfer signal is a signal for transferring the charge stored in each horizontal transfer element 101c, it is feasible to reduce storage of an unwanted charge in each horizontal transfer element 101c.

The transfer signals to the vertical transfer elements 101b are outputted at regular intervals from the CCD driving circuit 102 before input of a trigger signal. Namely, the transfer signals are outputted at regular intervals in each period T in Fig. 4H. Since this transfer signal is a signal for transferring the charge stored in each vertical transfer element 101b, it is feasible to reduce storage of an unwanted charge in each vertical transfer element 101b.

The microcomputer 103 and the CCD driving circuit 102 in the controller 100 output an electronic shutter signal per generation of an excitation pulse component 50 and output a readout signal corresponding to output of this electronic shutter signal. For this reason, it becomes feasible to perform measurement of a fluorescent component 60 corresponding to each excitation pulse component 50. Since the microcomputer 103 and the CCD driving circuit 102 output a transfer signal per predetermined number of readout signals outputted, it is feasible to measure the predetermined number of fluorescent components in a lump.

In this embodiment, the excitation pulse components 50 are generated so that fluorescent components 60 are of a substantially identical waveform and period. Since the fluorescent components 60 are of the substantially identical period, the number of fluorescences generated per predetermined time can be readily specified. Since the fluorescent components 60 are of the substantially identical waveform, it becomes easy to measure the identical waveform part which is equivalent among fluorescent components.

Furthermore, the microcomputer 103 and the CCD driving circuit 102 as controller 100 calculate the output delay time D and the delay time W relative to the trigger signal so as to enable measurement of the same waveform part in each waveform of fluorescent component 60, and outputs the electronic shutter signals and the readout signals based thereon. Therefore, it is easy to measure the same waveform parts of respective fluorescent components emitted multiple times (t) and, by dividing the sum of the measurement results (Δq × t) by the predetermined number of times (t), the charge Δq corresponding to the waveform part to be measured can be calculated.

The fluorescence measuring apparatus according to the present invention can be modified in various ways, without having to be limited to the above-described embodiment.

### Industrial Applicability

As described above, since the present invention adopts the configuration wherein the controller outputs the electronic shutter signals corresponding to the respective excitation pulse component emitted toward the specimen and outputs the readout signals corresponding to the output of the electronic shutter signals, the invention enables the measurement of the fluorescent component corresponding to each excitation pulse component. Since the controller outputs the transfer signal per predetermined number of readout signals outputted, the predetermined number of fluorescent components can be measured in a lump. Therefore, we obtained the fluorescence measuring apparatus capable of measuring the fluorescent components emitted from the specimen corresponding to excitation pulse components, by use of the CCD.

## Claims

1. A fluorescence measuring apparatus (10) for emitting a plurality of excitation pulse components (50) toward a specimen (40) and for measuring fluorescent components (60) emitted from the specimen (40) corresponding to the respective excitation pulse components (50), said fluorescence measuring apparatus (10) comprising:
a photoelectric converter (101a) for implementing photoelectric conversion of a fluorescent component (60) emitted from the specimen;
a charge storage element (101b, 101c) for storing a charge resulting from the photoelectric conversion by said photoelectric converter (101a) and for transferring the charge stored; and
a controller (100) for outputting an electronic shutter signal for sweeping away the charge resulting from the photoelectric conversion by said photoelectric converter (101a), a readout signal for reading the charge resulting from the photoelectric conversion, into said charge storage element (101b, 101c), and a transfer signal for sequentially transferring the charge read,
wherein said controller (100) outputs the electronic shutter signal corresponding to generation of a pulse component (50) included in the excitation light, outputs the readout signal corresponding to output of said electronic shutter signal, and outputs the transfer signal per at least two readout signals outputted; **characterized in that** the controller (100) outputs the electronic shutter signal and the transfer signal consecutively before emission of the fluorescent components (60)

2. A fluorescence measuring apparatus according to claim 1, wherein the excitation pulse components (50) are of a substantially identical waveform and identical period, and
wherein the fluorescent components (60) are of a substantially identical waveform and identical period.

3. A fluorescence measuring apparatus (10)according to claim 2, wherein said controller (100) outputs the electronic shutter signal and the readout signal so as to enable measurement of an identical waveform part in each of the fluorescent components (60).

4. A fluorescence measuring apparatus according to claim 1, wherein said charge storage element (101b, 101c) comprises a first charge storage element (101b) for directly receiving the charge from said photoelectric converter (101a), and a second charge storage element (101c) for receiving the charge from said first charge storage element (101b), and
wherein said controller (100) outputs the transfer signal per predetermined number of readout signals outputted, to said first charge storage element (101b) and consecutively outputs the transfer signal to said second charge storage element (101c).

## Patentansprüche

1. Fluoreszenzmessvorrichtung (10) zum Emittieren einer Mehrzahl von Anregungsimpulskomponenten (50) in Richtung zu einer Probe (40) und zum Messen von Fluoreszenzkomponenten (60), die von der Probe (40) entsprechend den jeweiligen Anregungsimpulskomponenten (50) emittiert werden, wobei die Fluoreszenzmessvorrichtung (10) umfasst:
einen photoelektrischen Wandler (101a) zum Implementieren einer photoelektrischen Wandlung einer Fluoreszenzkomponente (60), die von der Probe emittiert wird;
ein Ladungsspeicherelement (101 b, 101 c) zum Speichern einer Ladung, die aus der photoelektrischen Wandlung mittels des photoelektrischen Wandlers (101 a) resultiert, und zum Übertragen der gespeicherten Ladung; und
eine Steuervorrichtung (100) zum Ausgeben eines elektronischen Verschlusssignals zum Ausfegen der aus der photoelektrischen Wandlung mittels des photoelektrischen Wandlers (101 a) resultierenden Ladung, eines Auslesesignals zum Einlesen der aus der photoelektrischen Wandlung resultierenden Ladung in das Ladungsspeicherelement (101 b, 101 c), und eines Übertragungssignals zum anschließenden Übertragen der gelesenen Ladung,
wobei die Steuervorrichtung (100) das elektronische Verschlusssignal entsprechend der Erzeugung einer Impulskomponente (50), die im Anregungslicht enthalten ist, ausgibt, das Auslesesignal entsprechend einer Ausgabe des elektrischen Verschlusssignals ausgibt, und das Übertragungssignal für je wenigstens zwei ausgegebene Auslesesignale ausgibt;
**dadurch gekennzeichnet, dass** die Steuervorrichtung (100) das elektronische Verschlusssignal und das Übertragungssignal vor der Emission der Fluoreszenzkomponenten (60) nacheinander ausgibt.

2. Fluoreszenzmessvorrichtung nach Anspruch 1, wobei die Anregungsimpulskomponenten (50) im Wesentlichen eine identische Wellenform und eine identische Periode aufweisen, und
wobei die Fluoreszenzkomponenten (60) im Wesentlichen eine identische Wellenform und eine identische Periode aufweisen.

3. Fluoreszenzmessvorrichtung (10) nach Anspruch 2, wobei die Steuervorrichtung (100) das elektronische Verschlusssignal und das Auslesesignal so ausgibt, dass eine Messung eines identischen Wellenformteils in jeder der Fluoreszenzkomponenten (60) ermöglicht wird.

4. Fluoreszenzmessvorrichtung nach Anspruch 1, wobei das Ladungsspeicherelement (101 b, 101 c) ein erstes Ladungsspeicherelement (101 b) zum direkten Empfangen der Ladung vom photoelektrischen Wandler (101 a) und ein zweites Ladungsspeicherelement (101c) zum Empfangen der Ladung vom ersten Ladungsspeicherelement (101 b) umfasst, und
wobei die Steuervorrichtung (100) das Übertragungssignal für eine vorgegebene Anzahl von ausgegebenen Auslesesignalen an das erste Ladungsspeicherelement (101 b) ausgibt und anschließend das Übertragungssignal an das zweite Ladungsspeicherelement (101c) ausgibt.

## Revendications

1. Appareil (10) de mesure de la fluorescence destiné à émettre plusieurs composants (50) d'impulsions d'excitation vers un spécimen (40) et à mesurer des composants fluorescents (60) émis du spécimen (40) correspondants aux composants (50) d'impulsions d'excitations respectifs, ledit appareil (10) de mesure de la fluorescence comprenant:
un convertisseur photoélectrique (101a) destiné à mettre en oeuvre une conversion photoélectrique d'un composant fluorescent (60) émis du spécimen;
un élément (101b, 101c) de stockage de charge destiné à stocker une charge résultant de la conversion photoélectrique par ledit convertisseur photoélectrique (101a) et à transférer la charge stockée; et
une unité de commande (100) destinée à délivrer en sortie un signal d'obturation électronique destiné à emporter la charge résultant de la conversion photoélectrique par ledit convertisseur photoélectrique (101a), un signal de lecture destiné à lire la charge résultant de la conversion photoélectrique, dans ledit élément (101b, 101c) de stockage de charge, et un signal de transfert destiné à transférer séquentiellement la charge lue,
dans lequel ladite unité de commande (100) délivre en sortie le signal d'obturation électronique correspondant à la génération d'un composant (50) d'impulsion compris dans la lumière d'excitation, délivre en sortie le signal de lecture correspondant à la sortie dudit signal d'obturation électronique, et délivre en sortie le signal de transfert par au moins deux signaux de lecture délivrés en sortie; **caractérisé en ce que** l'unité de commande (100) délivre en sortie consécutivement le signal d'obturation électronique et le signal de transfert avant l'émission des composants fluorescents (60).

2. Appareil de mesure de la fluorescence selon la revendication 1, dans lequel les composants (50) d'impulsions d'excitation ont une forme d'onde sensiblement identique et une période sensiblement identique, et
dans lequel les composants fluorescents (60) ont une forme d'onde sensiblement identique et une sensiblement période identique.

3. Appareil (10) de mesure de la fluorescence selon la revendication 2, dans lequel ladite unité de commande (100) délivre en sortie le signal d'obturation électronique et le signal de lecture de sorte à permettre la mesure d'une partie à forme d'onde identique dans chacun des composants fluorescents (60).

4. Appareil de mesure de la fluorescence selon la revendication 1, dans lequel ledit élément (101b, 101c) de stockage de charge comprend un premier élément (101b) de stockage de charge destiné à recevoir directement la charge depuis ledit convertisseur photoélectrique (101a), et un second élément (101c) de stockage de charge destiné à recevoir la charge depuis ledit premier élément (101b) de stockage de charge, et
dans lequel ladite unité de commande (100) délivre en sortie le signal de transfert par un nombre prédéterminé de signaux de lecture délivrés en sortie, vers ledit premier élément (101b) de stockage de charge et délivre consécutivement en sortie le signal de transfert audit second élément (101c) de stockage de charge.
